# EUROPEAN PATENT SPECIFICATION

(11) **EP 4 442 614 B1**
(45) Date of publication and mention of the grant of the patent: **31.12.2025**
(21) Application number: 23802595.1
(22) Date of filing: 18.04.2023
(51) Int. Cl.: B65G 1/137, G06Q 10/08, G06Q 10/087, G06Q 10/0631

(54) **PENDING ORDER PROCESSING METHOD AND APPARATUS, AND DEVICE AND STORAGE MEDIUM**
VERFAHREN UND VORRICHTUNG ZUR VERARBEITUNG VON AUSSTEHENDEN BESTELLUNGEN SOWIE VORRICHTUNG UND SPEICHERMEDIUM
PROCÉDÉ ET APPAREIL DE TRAITEMENT DE COMMANDES EN SUSPENS ET DISPOSITIF ET SUPPORT DE STOCKAGE

(30) Priority: 13.05.2022 CN 202210521115
(43) Date of publication of application: 09.10.2024
(73) Proprietor: Shenzhen Kubo Software Co., Ltd, Shenzhen, Guangdong 518000 (CN); Hai Robotics Co., Ltd., Shenzhen, Guangdong 518000 (CN)
(72) Inventor: ZHANG, Min, Shenzhen, Guangdong 518000 (CN); SONG, Tongjuan, Shenzhen, Guangdong 518000 (CN)
(74) Representative: Nederlandsch Octrooibureau
(86) International application number: PCT/CN2023/089058
(87) International publication number: WO 2023/216820

(56) References cited:
- WO-A1-2021/054916
- CN-A- 106 372 996
- CN-A- 108 502 435
- CN-A- 108 615 126
- CN-A- 110 182 718
- CN-A- 110 286 673
- CN-A- 111 470 228
- CN-A- 111 932 186
- CN-A- 112 722 675
- CN-A- 113 998 352
- CN-A- 113 998 352
- CN-A- 113 998 358
- CN-A- 114 379 973
- CN-A- 114 933 116
- JP-A- H1 196 240

## Description

### TECHNICAL FIELD

The present disclosure relates to the field of smart warehouse technologies, and in particular, to a method and an apparatus for processing a suspended order and a storage medium.

### BACKGROUND OF THE INVENTION

A smart operating system is used in a warehouse robot-based warehouse system, which automatically delivers goods through system instructions. The warehouse system can run continuously 24-7, replaces manual management and operations, improves the efficiency of warehousing, and has been widely applied and gained popularity.

In current warehouse systems, a smart warehouse system generates an outbound order, and a warehouse robot transports a material corresponding to the order to a workstation for delivery. However, during actual operation, a suspended order may occur due to causes such as picking shortage, leftover clearing, a workstation fault, or the like. That is, the execution of a task corresponding to an order is paused. As a result, an order task allocated in the warehouse system cannot be completed in time, and a material corresponding to a suspended order lacks effective management, severely affecting delivery efficiency.

Chinese patent application NO. CN111470228A discloses a system, method and device for cargo sorting, and a storage medium. The system comprises a storage warehouse, a warehouse-out roadway, sorting roadways and sorting workstations which are sequentially connected, wherein a rotary roadway is connected with the warehouse-out roadway and the sorting roadways; a task allocation center is connected with a roadway control center, and used for re-allocating available sorting workstations for current tasks which correspond to material boxes to be sorted as target workstations while determining mechanical arms to be abnormal; and the roadway control center is connected with the warehouse-out roadway, the sorting roadways and the rotary roadway, and used for conveying the material boxes to be sorted in the abnormal sorting workstations to the warehouse-out roadway through the rotary roadway when the mechanical arms are abnormal, and controlling the warehouse-out roadway and the sorting roadways to convey the material boxes to be sorted to the target workstations which are determined by the task allocation center. With the adoption of the abovementioned technical scheme, in the case that the mechanical arms in the sorting workstations are abnormal, influence on warehouse-out time of a current sorting order can be reduced, and the warehouse-out efficiency of the order is ensured.

Chinese patent application NO. CN113998352A a picking and dispatching method, device, electronic equipment, storage medium and warehousing system. The picking and dispatching method includes: when receiving an outbound task for a target order, allocating materials in a deliverable state to the target order. port, and controls the transportation device to deliver the goods in the target order to the assigned feeding port; before the delivery of the goods in the target order is completed, if the status of the feeding port assigned to the target order changes from the deliverable state to the undeliverable state, Then the target order is reassigned to other feeding ports that are in a deliverable state; the transportation device is controlled to deliver the goods in the target order to other feeding ports. The above method achieves flexible allocation between target orders and feeding ports, improves the working efficiency of the transportation device, and improves picking efficiency.

### SUMMARY OF THE INVENTION

Embodiments of the present disclosure provide a method and an apparatus for processing a suspended order and a storage medium, to resolve the problem that an order task cannot be completed in time after an order is suspended. The invention is set out in the appended set of claims.

According to a first aspect, embodiments of the present disclosure provide a method for processing a suspended order. The method for processing a suspended order is applied to a smart warehouse system. The method for processing a suspended order includes:
receiving a taking over request for a target order, and determining a first workstation corresponding to the target order according to the taking over request, where the target order is an order suspended when a second workstation performs an order suspending operation;
determining a processing strategy of the target order based on a state of the target order when being suspended at the second workstation; and
completing the target order at the first workstation based on the processing strategy.

The taking over request is a request sent by the first workstation based on scanning of an identification code of an order container by a taking over device of the first workstation.

Optionally, before the receiving a taking over request for a target order, and determining a first workstation corresponding to the target order according to the taking over request, the method further includes: determining, in response to receiving an order suspending request of the second workstation, at least one order corresponding to the order suspending request, where the order suspending request is used for requesting to pause processing of the at least one order, and the at least one order includes the target order; and determining, based on a state of each order when being suspended at the second workstation, a processing strategy of an operation container associated with the at least one order.

Optionally, the determining, in response to receiving an order suspending request of the second workstation, at least one order corresponding to the order suspending request includes:
when a first class order in a picking shortage state exists at the second workstation corresponding to the order suspending request, determining that the first class order is the at least one order corresponding to the order suspending request; when an order in a picking shortage state does not exist at the second workstation corresponding to the order suspending request, determining that each uncompleted order corresponding to the second workstation is the at least one order corresponding to the order suspending request; and/or in response to first indication information of the second workstation, determining that an order specified by the first indication information is the at least one order corresponding to the order suspending request.

Optionally, the determining, based on a state of each order when being suspended at the second workstation, a processing strategy of an operation container associated with the at least one order includes: determining, based on a vacant state of an order container associated with each order, a first processing strategy of the order container; and determining, based on an execution state of a bin associated with each order, a second processing strategy of the bin.

Optionally, the determining, based on a vacant state of an order container associated with each order, a first processing strategy of the order container includes: when a picked material has been placed in the order container, determining that the first processing strategy is canceling binding relationships between the order container and a transporting task of a bin, between the order container and the second workstation, and between the order container and a seeding position.

Optionally, the determining, based on an execution state of a bin associated with each order, a second processing strategy of the bin includes: when a bin has not been bound to a warehouse robot or has not been retrieved by a bound warehouse robot, determining that the second processing strategy is canceling an outbound task for the bin; when a bin has been retrieved by a bound warehouse robot but has not been transported to the second workstation, determining that the second processing strategy is indicating the bound warehouse robot to transport the bin back for restocking; and when a bin has been transported to the second workstation by a bound warehouse robot, determining that the second processing strategy is indicating the bound warehouse robot to transport the bin back for restocking or indicating the second workstation to temporarily store the bin.

Optionally, after the determining, in response to receiving an order suspending request of the second workstation, at least one order corresponding to the order suspending request, the method further includes: if the at least one order corresponding to the order suspending request is a first class order in a picking shortage state, determining that the second workstation corresponding to the order suspending request is in an order-allocable state; and if a first class order in a picking shortage state does not exist at the second workstation, determining that the second workstation corresponding to the order suspending request is in an order-unallocable state.

Optionally, the determining a processing strategy of the target order based on a state of the target order when being suspended at the second workstation includes: determining, based on an order fulfillment level of the target order when being suspended at the second workstation, that the processing strategy of the target order is generating an order task associated with the target order according to an unfulfillment quantity of the target order.

According to a second aspect, embodiments of the present disclosure provide an apparatus for processing a suspended order. The apparatus for processing a suspended order is applied to a smart warehouse system. The apparatus for processing a suspended order includes:
a receiving module, configured to: receive a taking over request for a target order, and determine a first workstation corresponding to the target order according to the taking over request, where the target order is an order suspended when a second workstation performs an order suspending operation;
a determination module, configured to determine a processing strategy of the target order based on a state of the target order when being suspended at the second workstation; and
a processing module, configured to complete the target order at the first workstation based on the processing strategy.

In the receiving module, the taking over request is a request sent by the first workstation based on scanning of an identification code of an order container by a taking over device of the first workstation.

Optionally, the determination module is further configured to: before the taking over request for the target order is received and the first workstation corresponding to the target order is determined according to the taking over request, determine, in response to receiving an order suspending request of the second workstation, at least one order corresponding to the order suspending request, where the order suspending request is used for requesting to pause processing of the at least one order, and the at least one order includes the target order; and determine, based on a state of each order when being suspended at the second workstation, a processing strategy of an operation container associated with the at least one order.

Optionally, the determination module is further configured to: when a first class order in a picking shortage state exists at the second workstation corresponding to the order suspending request, determine that the first class order is the at least one order corresponding to the order suspending request; when an order in a picking shortage state does not exist at the second workstation corresponding to the order suspending request, determine that each uncompleted order corresponding to the second workstation is the at least one order corresponding to the order suspending request; and/or in response to first indication information of the second workstation, determine that an order specified by the first indication information is the at least one order corresponding to the order suspending request.

Optionally, the determination module is further configured to: determine, based on a vacant state of an order container associated with each order, a first processing strategy of the order container; and determine, based on an execution state of a bin associated with each order, a second processing strategy of the bin.

Optionally, the determination module is further configured to: when a picked material has been placed in the order container, determine that the first processing strategy is canceling binding relationships between the order container and a transporting task of a bin, between the order container and the second workstation, and between the order container and a seeding position.

Optionally, the determination module is further configured to: when a bin has not been bound to a warehouse robot or has not been retrieved by a bound warehouse robot, determine that the second processing strategy is canceling an outbound task for the bin; when a bin has been retrieved by a bound warehouse robot but has not been transported to the second workstation, determine that the second processing strategy is indicating the bound warehouse robot to transport the bin back for restocking; and when a bin has been transported to the second workstation by a bound warehouse robot, determine that the second processing strategy is indicating the bound warehouse robot to transport the bin back for restocking or indicating the second workstation to temporarily store the bin.

Optionally, the determination module is further configured to: if the at least one order corresponding to the order suspending request is a first class order in a picking shortage state, determine that the second workstation corresponding to the order suspending request is in an order-allocable state; and if a first class order in a picking shortage state does not exist at the second workstation, determine that the second workstation corresponding to the order suspending request is in an order-unallocable state.

Optionally, the determination module is further configured to: determine, based on an order fulfillment level of the target order when being suspended at the second workstation, that the processing strategy of the target order is generating an order task associated with the target order according to an unfulfillment quantity of the target order.

According to a third aspect, embodiments of the present disclosure further provide a control device. The control device includes:
at least one processor; and
a memory communicatively connected to the at least one processor, where
the memory is configured to store instructions executable by the at least one processor, and the instructions, when being executed by the at least one processor, cause the control device to perform the method for processing a suspended order in the first aspect of the present disclosure.

According to a fourth aspect, embodiments of the present disclosure further provide a computer-readable storage medium. The computer-readable storage medium is configured to store computer-executable instructions, and the computer-executable instructions, when being executed by a processor, implement the method for processing a suspended order in the first aspect of the present disclosure.

According to a fifth aspect, embodiments of the present disclosure further provide a computer program product. The computer program product includes computer-executable instructions, and the computer-executable instructions, when being executed by a processor, implement the method for processing a suspended order in the first aspect of the present disclosure.

For the method for processing a suspended order and apparatus, device, system, and storage medium provided in the embodiments of the present disclosure, a taking over request for a target order is received, and a first workstation corresponding to the target order is determined according to the taking over request; then a processing strategy of the target order is determined based on a state of the target order when being suspended at a second workstation; and the target order is completed at the first workstation based on the processing strategy. In this way, an order paused due to suspension is taken over by the first workstation and processed in time, to effectively resolve the problem that an order task cannot be completed in time after an order is suspended, and a corresponding processing strategy can be adjusted according to a state of a target order being suspended, so that a material of a suspended order can be processed in time by using a targeted processing strategy, thereby effectively improving the management effect of the material corresponding to the suspended order, and improving the processing efficiency of a suspended order.

### BRIEF DESCRIPTION OF DRAWINGS

Accompanying drawings herein are incorporated into the specification and constitute a part of the present disclosure, show embodiments that conform to the present disclosure, and are used for describing a principle of the present disclosure together with the present disclosure.
FIG. 1 is a diagram of an application scenario of a method for processing a suspended order according to embodiments of the present disclosure;
FIG. 2 is a flowchart of a method for processing a suspended order according to an embodiment of the present disclosure;
FIG. 3a is a flowchart of a method for processing a suspended order according to another embodiment of the present disclosure.
FIG. 3b is a schematic diagram of relationship between an order suspending request and a corresponding order according to another embodiment of the present disclosure;
FIG. 4 is a flowchart of a method for processing a suspended order according to another embodiment of the present disclosure;
FIG. 5 is a flowchart of a method for processing a suspended order according to another embodiment of the present disclosure;
FIG. 6 is a schematic structural diagram of an apparatus for processing a suspended order according to another embodiment of the present disclosure; and
FIG. 7 is a schematic structural diagram of a control device according to another embodiment of the present disclosure.

Definite embodiments of the present disclosure have been shown by means of the above accompanying drawings, which will be described in greater detail later. These accompanying drawings and textual descriptions are not intended to limit the scope of the concept of the present disclosure in any way, but rather to illustrate the concepts of the present disclosure for those skilled in the art with reference to particular embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. Implementations described in the following exemplary embodiments do not represent all implementations consistent with the present disclosure. On the contrary, the implementations are merely examples of an apparatus and a method that are consistent with some aspects of the present disclosure described in detail in claims.

The following describes the technical solutions of the present disclosure and how to resolve the foregoing technical problems according to the technical solutions of the present disclosure in detail by using specific embodiments. The following several specific embodiments may be combined with each other, and the same or similar concepts or processes may not be described repeatedly in some embodiments. The following describes the embodiments of the present disclosure with reference to the accompanying drawings.

When a smart warehouse system processes an order, a bin needs to be transported from the stock of a warehouse to a workstation, a target good corresponding to the order is picked from the bin at the workstation, and then the target good is delivered. However, during actual operation, it may be impossible to continue to complete order picking due to order picking shortage, a workstation fault, or workstation leftover clearing. In this case, the workstation needs to suspend the order, and after the problematic order is suspended, the processing of the order may be paused. However, a suspended order usually needs to wait for subsequent manual processing by a management person, a wait period of manual processing is long, and a material corresponding to the suspended order also lacks a uniform and effective management method. During manual processing, it takes time to search for the material corresponding to the suspended order. As a result, during the subsequent processing of the suspended order, delivery efficiency is severely affected.

To resolve this problem, embodiments of the present disclosure provide a method for processing a suspended order. A corresponding processing strategy is automatically determined according to a taking over request received by a smart warehouse system for a suspended target order, so that the target order is completed at a first workstation from which the taking over request is sent, thereby effectively resolving the problem that a suspended order cannot be completed in time.

An application scenario in the embodiments of the present disclosure is described below:

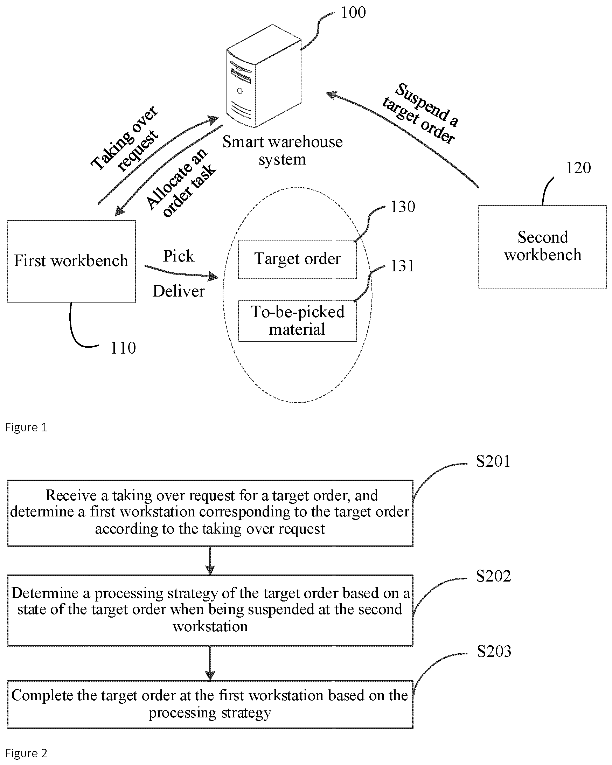

FIG. 1 is a diagram of an application scenario of a method for processing a suspended order according to embodiments of the present disclosure. As shown in FIG. 1, in a suspended order processing procedure, a smart warehouse system 100 allocates, according to a taking over request sent by a first workstation 110, a target order 130 suspended by a second workstation 120 to the first workstation 110, and the first workstation 110 completes the picking and delivery of a to-be-picked material 131 corresponding to the target order.

It is to be noted that only one first workstation, one second workstation, one target order, and one to-be-picked material are used as an example for description in the scenario shown in FIG. 1. However, the present disclosure is not limited thereto. That is, any quantity of first workstations, second workstations, target orders, and to-be-picked materials may be used.

A method for processing a suspended order provided in the present disclosure is described below through specific embodiments.

FIG. 2 is a flowchart of a method for processing a suspended order according to an embodiment of the present disclosure. The method for processing a suspended order is applied to a smart warehouse system. As shown in FIG. 2, the method for processing a suspended order provided in this embodiment includes the following steps.

Step S201: Receive a taking over request for a target order, and determine a first workstation corresponding to the target order according to the taking over request.

The target order is an order suspended when a second workstation performs an order suspending operation.

Specifically, the target order is a suspended outbound order. After being suspended, the target order is recorded in a server of the smart warehouse system, and in this case, the target order in the server is in a state that processing is paused and a corresponding workstation that is to process the order is not configured.

In some embodiments, a suspended order state is not configured in the server in a targeted manner. In this case, a paused order may be considered as an order in the suspended order state.

An interaction device, for example, a dedicated tablet computer, that allows viewing of states of an order and a material is configured on a workstation. Through the interaction device, an order can be chosen and suspended, to enable the order to be in the suspended order state. In addition, a target order in the suspended order state can be viewed, and one or more target orders are selected for taking over, to process the target order at the workstation. Alternatively, an order container corresponding to the target order in the suspended order state is transported from the second workstation to the first workstation, and a taking over device (for example, a code scanner, a camera, or the like) of the first workstation acquires information about the order container to obtain corresponding order information, to take over the target order corresponding to the order container to the first workstation.

When a target order to be taken over is selected through the workstation, a taking over request is sent to the server. The taking over request is used for indicating to request the server to allocate the outbound order and a corresponding material to a workstation from which the taking over request is sent, to perform subsequent delivery. The workstation from which the taking over request is sent is the first workstation, and the workstation at which the target order is suspended is the second workstation.

The taking over request may simultaneously request to take over a plurality of suspended orders. For example, when the second workstation needs to go offline, a plurality of orders that are being processed but uncompleted may exist. These orders are simultaneously suspended. These suspended orders may be subsequently taking over by one or two workstations to be centrally processed and completed.

Step S202: Determine a processing strategy of the target order based on a state of the target order when being suspended at the second workstation.

Specifically, a state of the target order being suspended is used for indicating an execution state that the target order is in and a cause of order suspension when the target order is suspended. If the target order is not executed yet, an empty order container may be directly selected from the first workstation to bind the corresponding target order to perform delivery, and it is not necessary to transport the order container in the second workstation to the first workstation, thereby improving processing efficiency.

For example, the target order is suspended due to a fault of the second workstation. In this case, the first workstation that takes over the target order may acquire an order container of the target order at the second workstation, and directly acquires a material that has not been picked by the second workstation corresponding to the target order to perform subsequent processing. However, if the target order is suspended due to picking shortage, it needs to be determined whether a material of a picking shortage part corresponding to the target order exists in a warehouse, whether replenishment is required, and whether replenishment is completed. It needs to be determined that the material of the picking shortage part exists in the warehouse before subsequent processing can be performed. The picking shortage refers to materials that reach the second workstation cannot meet a requirement of the target order.

Therefore, for different states during suspension of the target order, a corresponding processing strategy is selected, so that the processing efficiency of an order can be effectively improved, and it is ensured that the order can be completed in time.

Step S203: Complete the target order at the first workstation based on the processing strategy.

Specifically, after the processing strategy is determined, if a warehouse robot needs to transport a bin and/or the order container corresponding to the target order based on the processing strategy, indication information is sent to the warehouse robot based on the processing strategy. A material and/or the order container required to complete the target order is conveyed to the first workstation, to enable a worker, a robotic arm, or the like of the first workstation to complete the picking of a material, so that the worker does not need to manually search for the material, the bin, and the order container that need to be delivered. The efficiency of delivery and picking is affected by the search for a material/bin, difficulty in determining whether materials are sufficient, a miss in picking, or other problem. Therefore, through the transporting by the warehouse robot, it is convenient for the first workstation to quickly complete the picking and delivery for the target order, thereby ensuring the processing efficiency.

For the method for processing a suspended order provided in the embodiments of the present disclosure, a taking over request for a target order is received, and a first workstation corresponding to the target order is determined according to the taking over request; then a processing strategy of the target order is determined based on a state of the target order when being suspended at a second workstation; and the target order is completed at the first workstation based on the processing strategy. In this way, an order paused due to suspension is taken over by the first workstation and processed in time, to effectively resolve the problem that an order task cannot be completed in time after an order is suspended, and a corresponding processing strategy can be adjusted according to a state of a target order being suspended, so that a material of a suspended order can be processed in time by using a targeted processing strategy, thereby effectively improving the management effect of the material corresponding to the suspended order, and improving the processing efficiency of a suspended order.

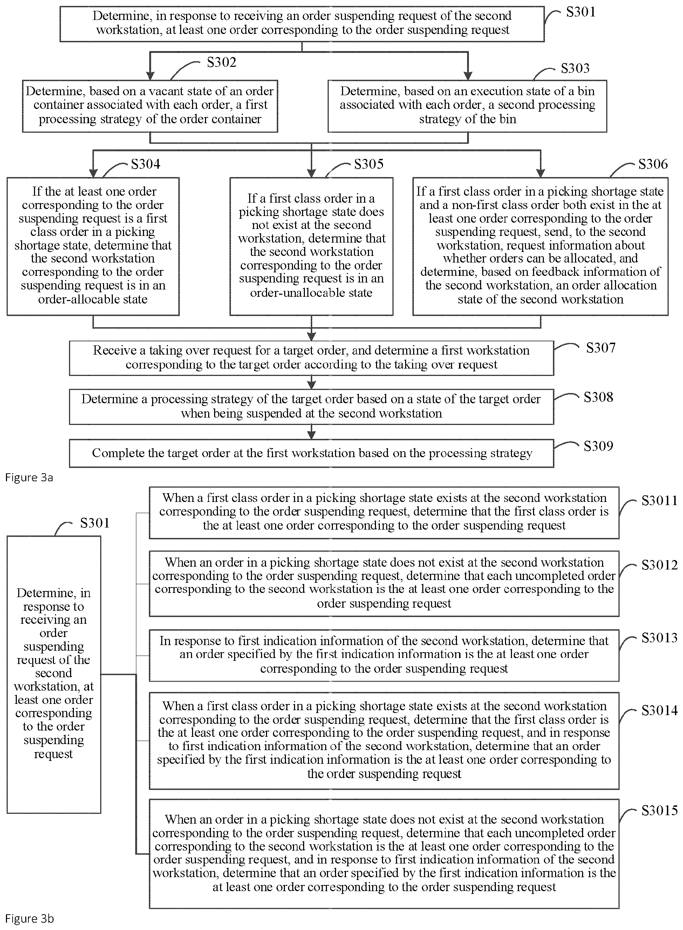

FIG. 3a is a flowchart of a method for processing a suspended order according to another embodiment of the present disclosure. The method for processing a suspended order provided in the embodiments of the present disclosure is a further definition based on the embodiment shown in FIG. 2. As shown in FIG. 3a, the method for processing a suspended order provided in this embodiment includes the following steps.

Step S301: Determine, in response to receiving an order suspending request of the second workstation, at least one order corresponding to the order suspending request.

The order suspending request is used for requesting to pause processing of the at least one order, and the at least one order includes the target order.

Specifically, the order suspending request is a request that is sent by the second workstation to the server through the interaction device and indicates that at least one order needs to be paused. When receiving the order suspending request, the server may determine at least one order in various manners. For example, the server displays, on the interaction device according to the order suspending request, an order that the second workstation has not completed currently. Then, the server determines, based on a selection operation by a worker of the second workstation, at least one order that needs to be suspended, where the at least one order includes the foregoing target order.

Further, FIG. 3b is a schematic diagram of a relationship between the order suspending request and a corresponding order. The determining the at least one order corresponding to the order suspending request includes the following cases:

Step S3011: When a first class order in a picking shortage state exists at the second workstation corresponding to the order suspending request, determine that the first class order is the at least one order corresponding to the order suspending request.

Specifically, the first class order is used for indicating an order in a picking shortage state.

When the order suspending request of the second workstation is received, all orders allocated to the second workstation are determined, and it is determined whether a message about picking shortage in any order of all the orders is received, to determine that a first class order with picking shortage exists in the second workstation.

Information about picking shortage in an order may be fed back by the interaction device of the workstation to the server. Therefore, the server may determine, according to an order with a message about picking shortage sent by the second workstation, whether the first class order exists in the second workstation corresponding to the order suspending request.

In a case that the order suspending request of the second workstation is received and the first class order exists in the second workstation, because it is currently impossible to continue to complete picking for the first class order in a picking shortage state, it may be predetermined that the order suspending request is for the first class order, and the first class order is first determined as an order corresponding to the order suspending request.

Step S3012: When an order in a picking shortage state does not exist at the second workstation corresponding to the order suspending request, determine that each uncompleted order corresponding to the second workstation is the at least one order corresponding to the order suspending request.

Specifically, if an order in a picking shortage state does not exist in the second workstation, it indicates that the order suspending request of the second workstation does not belong to a case that an order needs to be paused due to picking shortage. In this case, the cause of order suspension may be a fault of the second workstation or order leftover clearing.

When the cause of order suspension is a fault of the second workstation, the second workstation cannot continue to process all uncompleted orders corresponding to the second workstation. Therefore, it may be directly determined that each uncompleted order corresponding to the second workstation is the at least one order corresponding to the order suspending request.

When the cause of order suspension is order leftover clearing of the second workstation, because leftover clearing occurs when a closing time or a shift change time is reached, in this case, the second workstation also cannot continue to process orders. Therefore, it may be directly determined that each uncompleted order corresponding to the second workstation is the at least one order corresponding to the order suspending request.

In some embodiments, order leftover clearing or a fault is determined by determining whether the server receives one or more order suspending requests within a set time period (for example, 5 minutes or 10 minutes). If at least two order suspending requests are received, it is considered that this case is a leftover clearing scenario (leftover clearing is determined based on time, in this case, usually more than one workstation sends an order suspending request, and therefore, leftover clearing may be determined according to a quantity of order suspending requests). If only a single order suspending request is received, it is considered that the cause is a fault of the second workstation (workstations generally do not encounter faults simultaneously).

The taking over request is sent by the interaction device of the second workstation. In this case, during the manual selection of orders that needs to be suspended, an order that should be chosen may be missed. Therefore, all the uncompleted orders corresponding to the second workstation are automatically determined as the orders corresponding to the order suspending request, so that a miss caused by manual selection is effectively avoided, thereby ensuring the effective management and timely processing of suspended orders.

In some embodiments, for a suspended order caused by a fault of the second workstation, a notification message for repairing the second workstation further needs to be sent to a management person in time. For a suspended order caused by leftover clearing, the second workstation does not need to be further processed.

In some embodiments, after Step S3011 and S3012, at least one determined order may further be presented through the interaction device, so that the management person can make a check and change, to ensure the accuracy of at least one order.

Step S3013: In response to first indication information of the second workstation, determine that an order specified by the first indication information is the at least one order corresponding to the order suspending request.

The first indication information is information that is included in the order suspending request and is used for specifying the at least one order corresponding to the order suspending request.

Specifically, the at least one order corresponding to the order suspending request may be determined through manual selection. A scenario of manually selecting and generating an order suspending request may be a picking shortage case, a workstation fault, a leftover clearing scenario, or the like, or may be that the workstation has a heavy task load an unprocessed order waiting in a line needs to be suspended, so that the server specifies again a workstation that is to process the order.

In this case, corresponding first indication information is generated based on at least one manually selected order that needs to be suspended, and an order suspending request is sent to the server based on the first indication information. When receiving the order suspending request including the first indication information, the server directly determines that an order specified by the first indication information is the at least one order corresponding to the order suspending request.

Step S3014: When a first class order in a picking shortage state exists at the second workstation corresponding to the order suspending request, determine that the first class order is the at least one order corresponding to the order suspending request, and in response to first indication information of the second workstation, determine that an order specified by the first indication information is the at least one order corresponding to the order suspending request.

Specifically, the server may receive the first indication information sent by the second workstation through manual selection, receive a message indicating picking shortage at the second workstation, and determine that a first class order in a picking shortage state exists at the first workstation. In this case, the order specified in the first indication information needs to be determined as the order corresponding to the order suspending request, and the first class order in a picking shortage state may also be automatically determined as the order corresponding to the order suspending request.

In some embodiments, the first class order may have an overlap with the order specified in the first indication information. For example, the purpose of the first indication information is to select an order in which picking shortage occurs for suspension. In this case, the first class order in a picking shortage state is automatically selected, so that a miss in selection can be avoided.

In some embodiments, the first class order may be different from the order specified in the first indication information. For example, the purpose of the first indication information is to select an unprocessed order for suspension (for example, a scenario in which a workstation has an excessively heavy task load). In this case, the first indication information and the first class order may have no overlapping part. In this case, the order specified in the first indication information and the first class order may both be determined as the orders corresponding to the order suspending request, to improve processing efficiency (because the first class order may need to be suspended or may not need to be suspended, a corresponding rule is configured to perform automatic selection, so that operations can be reduced, thereby improving processing efficiency).

Step S3015: When an order in a picking shortage state does not exist at the second workstation corresponding to the order suspending request, determine that each uncompleted order corresponding to the second workstation is the at least one order corresponding to the order suspending request, and in response to first indication information of the second workstation, determine that an order specified by the first indication information is the at least one order corresponding to the order suspending request.

Specifically, similar to Step S3014, in a scenario of leftover clearing or a workstation fault, the second workstation may send manually selected first indication information. However, in this case, all the uncompleted orders corresponding to the second workstation generally include the order specified in the first indication information. Therefore, it may be directly determined that each uncompleted orders corresponding to the second workstation is the at least one order corresponding to the order suspending request.

As can be learned from Step S3011 to Step S3015, based on suspended orders caused by different causes, there are different cases of selecting the order corresponding to the order suspending request. When the interaction device of the workstation sends the order suspending request, a specific cause of the order suspension is not necessarily selected. Therefore, in this case, the server may determine a cause of the order suspending request according to related information of the second workstation, to avoid missing an order that needs to be suspended.

Further, after at least one order corresponding to the order suspending request is determined, the processing strategy of an operation container associated with the at least one order needs to be determined based on a state of each order when being suspended at the second workstation. Refer to Step S302 and Step S303.

Step S302: Determine, based on a vacant state of an order container associated with each order, a first processing strategy of the order container.

Specifically, after at least one order corresponding to the order suspending request is determined, the processing strategy of the operation container associated with the at least one order needs to be determined based on the state of each order when being suspended at the second workstation. Specifically, the operation container includes an order container and a bin, and the two have different processing strategies in different order suspension states. Therefore, processing strategies of an order container and a bin need to be separately determined.

The order container is used for placing a material picked from the bin according to the target order. Therefore, if a picked material has been placed in the order container corresponding to the target order, the order container may continue to be used. If a material has not been placed in the order container corresponding to the target order, a new target order may be randomly selected to correspond to the order container, to place a picked material corresponding to the target order. In this case, it is not necessary to transport the order container bound before the target order is suspended from the second workstation to the first workstation.

Further, when a picked material has been placed in the order container, it is determined that the first processing strategy is canceling binding relationships between the order container and a transporting task of a bin, between the order container and the second workstation, and between the order container and a seeding position.

Specifically, when a picked material has been placed in the order container, the order container needs to be moved to the first workstation for subsequent picking. (If in this case, the taking over request of the first workstation has not been received, the order container is directly temporarily stored at a seeding position of the second workstation to wait for subsequent taking over.)

In this case, a transporting task that is allocated to the second workstation and is associated with the order container needs to be canceled first, and at the same time the binding relationships between the order container and the second workstation and between the order container of the seeding position (the seeding position refers to a corresponding position for placing the order container on the workstation) on the second workstation are canceled.

Then, when the taking over request of the first workstation for the target order is subsequently received, the order container may be moved to the first workstation through manual transporting (for example, transporting by the worker corresponding to the workstation sending the taking over request) or transporting by the warehouse robot (an instruction indicating to transport the order container to the seeding position of the first workstation is sent to the warehouse robot). In addition, the binding relationships between the order container and the first workstation and the corresponding seeding position are established, to make it convenient to continue to complete order picking.

Step S303: Determine, based on an execution state of a bin associated with each order, a second processing strategy of the bin.

Specifically, the execution state of the bin may be any one of the following: the bin is still placed on a shelving unit and is still not transported by the warehouse robot, the bin is being transported by the warehouse robot, the bin has been transported to the second workstation, and the bin is being picked at the second workstation.

According to different execution states of the bin, different second processing strategies need to be used, to process the bin in time and effectively.

Further, specific second processing strategies include the following cases:
Case 1: When a bin has not been allocated and bound to a warehouse robot or has not transported by a bound warehouse robot, determine that the second processing strategy is canceling a transporting task for the bin.

Specifically, when the bin has not been bound to a warehouse robot or has not been transported by a bound warehouse robot, the bin is still on a stock shelving unit. In this case, an outbound task (including a transporting task of the warehouse robot and a picking task of the second workstation) corresponding to the bin is directly canceled, and then a transporting task based on the first workstation is established again after the taking over request is received, so that the processing efficiency can be improved to the largest extent, thereby avoiding a waste of outbound time to continue with an original transporting task.

Case 2: When a bin has been transported by a bound warehouse robot but has not been transported to the second workstation, determine that the second processing strategy is indicating the bound warehouse robot to transport the bin back for restocking.

Specifically, after the bin is transported by the warehouse robot and has not been transported to the second workstation, in this case, the first workstation for taking over a suspended order has not been determined, and therefore a specific destination of the bin cannot be determined. To make it convenient to subsequently invoke the bin, the second processing strategy should be set to be directly restocking the bin. That is, a route is changed, and the bin is placed back on the shelving unit again, making it convenient for the bin to be invoked by a subsequent order.

Case 3: When a bin has been transported to the second workstation by a bound warehouse robot, determine that the second processing strategy is indicating the bound warehouse robot to transport the bin back for restocking or indicating the second workstation to temporarily store the bin.

Specifically, after the bin is transported to the second workstation, the second workstation has suspended the target order corresponding to the bin. In this case, the second workstation can no longer continue to pick the bin. Therefore, to make it convenient for another workstation to take over the target order and use the bin subsequently, the bin may be restocked. Alternatively, the bin may be temporarily stored at the second workstation or on a temporary storage shelf corresponding to the second workstation. After the taking over request is received, the warehouse robot or the worker transports the bin to the first workstation corresponding to the taking over request.

Step S304: If the at least one order corresponding to the order suspending request is a first class order in a picking shortage state, determine that the second workstation corresponding to the order suspending request is in an order-allocable state.

Specifically, if the at least one order corresponding to the order suspending request is a first class order in a picking shortage case, in this case, a scenario corresponding to the order suspending request is an order suspension scenario based on an order in a picking shortage state. In this scenario, the processing capability of the workstation is not affected, and only the suspended first class order cannot be processed. In this case, the second workstation is still in an order-allocable state, and the smart warehouse system may continue to allocate a to-be-processed order to the second workstation.

Step S305: If a first class order in a picking shortage state does not exist at the second workstation, determine that the second workstation corresponding to the order suspending request is in an order-unallocable state.

Specifically, if a picking shortage order does not exist at the second workstation, it indicates that the order corresponding to the order suspending request is caused by a fault of the second workstation, leftover clearing, or the like. If a fault occurs at the second workstation, an order cannot be processed until the second workstation is completely repaired. Therefore, the second workstation needs to be directly switched to an order-unallocable state, to avoid the problem that an order cannot be processed in time after an order is incorrectly allocated. In a scenario of leftover clearing, before the second workstation starts to work again, even if an order is allocated, the order cannot be processed in time. Therefore, the second workstation is also switched to an order-unallocable state, to ensure that an order can be processed in time by another workstation that is still working.

Step S306: If a first class order in a picking shortage state and a non-first class order both exist in the at least one order corresponding to the order suspending request, send, to the second workstation, request information about whether orders can be allocated, and determine, based on feedback information of the second workstation, an order allocation state of the second workstation.

Specifically, the order suspending request may be sent based on manual selection. Therefore, in this case, in the order suspending request sent by the second workstation, only some orders are first class orders in a picking shortage state. The remaining orders may be uncompleted orders selected due to a fault of a workstation, or may be unprocessed orders selected due to a task load of a workstation, or may be orders that need to be processed by a different workstation after coordination between workers.

In this case, feedback information needs to be directly sent to the second workstation when the order suspending request is received. The worker of the second workstation determines that the second workstation is in an order-allocable state (for example, only a scenario in which a workstation needs to be changed to process an order) or an order-unallocable state (for example, a scenario in which a fault occurs at a workstation).

Step S307: Receive a taking over request for a target order, and determine a first workstation corresponding to the target order according to the taking over request.

The target order is an order suspended when a second workstation performs an order suspending operation.

Step S308: Determine a processing strategy of the target order based on a state of the target order when being suspended at the second workstation.

Step S309: Complete the target order at the first workstation based on the processing strategy.

The content of Step S307 to Step S309 is the same as that of Step S201 to Step S203 in the embodiment shown in FIG. 2. Details are not described herein again.

In this embodiment, the smart warehouse system determines a target order corresponding to an order suspending request according to a cause of sending an order suspending request, determines, according to states of a bin and an order container when the target order is suspended, respective different processing strategies for the bin and the order container, and then selects a corresponding processing strategy for processing after a taking over request is received. In this way, it can be effectively ensured that all orders paused due to suspension, order containers, and bins can be managed and processed in time and effectively, to avoid misses and difficulty in management, so that when the suspended order is taken over, timely and effective processing of the suspended order can be ensured, thereby improving the management efficiency of a warehouse.

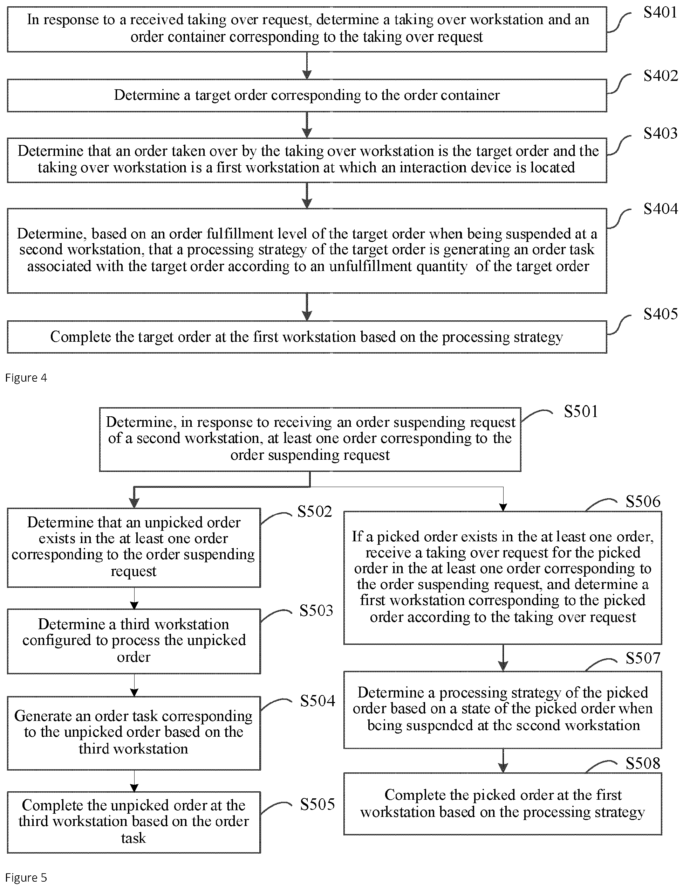

FIG. 4 is a flowchart of a method for processing a suspended order according to another embodiment of the present disclosure. As shown in FIG. 4, the method for processing a suspended order includes the following steps.

Step S401: In response to a received taking over request, determine a taking over workstation and an order container corresponding to the taking over request.

The taking over request is sent based on an action of entering information about the order container at the taking over workstation.

Specifically, for the taking over request, after a worker acquires the order container, an identification code on the order container is entered by an interaction device (for example, a code scanning apparatus) of a workstation (that is, the taking over workstation) at which the order container is located, to generate the taking over request. That is, the directly generated taking over request corresponds to the order container.

Step S402: Determine a target order corresponding to the order container.

Specifically, the order container has been allocated with the corresponding target order and recorded by a server, and therefore when receiving the order container corresponding to the taking over request, the server can determine the target order corresponding to the order container based on an allocated record, that is, determine the target order corresponding to the taking over request.

Step S403: Determine that an order taken over by the taking over workstation is the target order and the taking over workstation is a first workstation at which an interaction device is located.

Specifically, after the target order corresponding to the taking over request is determined, the server can allocate an operation corresponding to the target order to the taking over workstation that currently sends the taking over request for processing. The taking over workstation is the first workstation at which the interaction device operates a taking over action is located.

Step S404: Determine, based on an order fulfillment level of the target order when being suspended at a second workstation, that a processing strategy of the target order is generating an order task associated with the target order according to an unfulfillment quantity of the target order.

Specifically, according to a fulfillment level of the target order, an order task corresponding to a bin and the order container is adjusted. The adjustment includes adjusting the bin corresponding to the target order, generating a transporting task corresponding to a warehouse robot accordingly, and determining, according to whether a material is placed in an original order container of the second workstation, whether to continue to complete an order picking task based on the order container (if no material is placed in the order container, a new order container of the first workstation may be directly used, and if a material is placed, the order container may continue to be used).

For example, the target order includes the picking of 50 materials A. If the fulfillment level of the target order is 0, that is, processing has not started yet, a bin including at least 50 materials A needs to be hit before the picking of the order can be completed. If the fulfillment level of the target order is 80%, that is, only 10 more materials A need to be picked. In this case, any bin including more than 10 materials A may be used for completing the picking of the order. The server may redetermine a bin used for picking according to distances between shelving units on which bins are located and the first workstation or another factor, thereby improving outbound efficiency.

Step S405: Complete the target order at the first workstation based on the processing strategy.

The content of this step is the same as that of Step S203 in the embodiment shown in FIG. 2. Details are not described herein again.

In this embodiment, after taking over an order container corresponding to a suspended target order at the first workstation, a smart warehouse system determines a correspondence relationship between the target order and the first workstation according to the order container, and then respectively generates a corresponding order task to the first workstation and the warehouse robot according to a picking amount and a fulfillment quantity of the target order, to complete the target order at the first workstation. In this way, a specific order task that needs to be completed can be sent to the first workstation and the warehouse robot according to an actual completion status of the target order, to effectively ensure the completion of an outbound task of the target order, and simultaneously ensure the efficiency of material transporting and picking, thereby improving the management efficiency of a warehouse.

FIG. 5 is a flowchart of a method for processing a suspended order according to another embodiment of the present disclosure. As shown in FIG. 5, the method for processing a suspended order includes the following steps.

Step S501: Determine, in response to receiving an order suspending request of a second workstation, at least one order corresponding to the order suspending request.

The order suspending request is used for requesting to pause processing of the at least one order, and the at least one order includes a target order.

The content of this step is the same as that of Step S301 in the embodiment in FIG. 3. Details are not described herein again.

Step S502: Determine that an unpicked order exists in the at least one order corresponding to the order suspending request.

Specifically, in the order corresponding to the order suspending request, there may be an order that has been partially picked, or there may be an unpicked order. For an order that has been picked, targeted processing may be performed based on a taking over request of a first workstation by using the processing method in the embodiment shown in FIG. 2. If picking has not started for an order, in this case, no material is placed in an order container corresponding to the order. In this case, a workstation that continues to process the order does not need to take over the order container. Therefore, it is not necessary to wait for the workstation to send the taking over request, an order task of the order may be directly allocated by a server again.

Step S503: Determine a third workstation configured to process the unpicked order.

Specifically, the server may allocate the unpicked order according to task amounts of workstations. For example, a workstation with the lowest task amount is selected the third workstation to complete processing of the unpicked order. It is not necessary to wait for the first workstation to send the taking over request. Because a wait time after the unpicked order is suspended is reduced, the processing efficiency of the unpicked order can be improved.

Step S504: Generate an order task corresponding to the unpicked order based on the third workstation.

Specifically, after the third workstation is determined, a corresponding bin may be determined based on a material required by the unpicked order, and a transporting task is delivered to a warehouse robot. A corresponding picking task is simultaneously sent to an interaction device of the third workstation, making it convenient for the third workstation to complete the picking and delivery of the unpicked order based on the bin transported in the transporting task and the picking task.

Step S505: Complete the unpicked order at the third workstation based on the order task.

Specifically, a worker of the third workstation may quickly and directly complete material picking based on the picking task corresponding to the unpicked order and a position of an order container of the unpicked order corresponding to the third workstation, and no longer needs to acquire an order container originally bound to the server from the second workstation (the originally bound order container is further unbound before the third workstation is determined).

Step S506: If a picked order exists in the at least one order, receive a taking over request for the picked order in the at least one order corresponding to the order suspending request, and determine a first workstation corresponding to the picked order according to the taking over request.

The picked order is an order suspended when the second workstation performs an order suspending operation. The picked order is a partially picked order, that is, an order for which picking is performed but not completed.

Step S507: Determine a processing strategy of the picked order based on a state of the picked order when being suspended at the second workstation.

Step S508: Complete the picked order at the first workstation based on the processing strategy.

The content of Step S506 to Step S508 is the same as that of Step S201 to Step S203 in the embodiment shown in FIG. 2. Details are not described herein again.

In this embodiment, a smart warehouse system first determines whether picking has been started for an order corresponding to an order suspending request, then processes a picked order based on a taking over request, and directly allocates an unpicked order to a corresponding workstation for processing. In this way, respective processing can be performed according to states of suspended orders, and unpicked orders can be quickly and directly processed, thereby improving the processing efficiency of unpicked orders, and improving the overall processing efficiency of suspended orders.

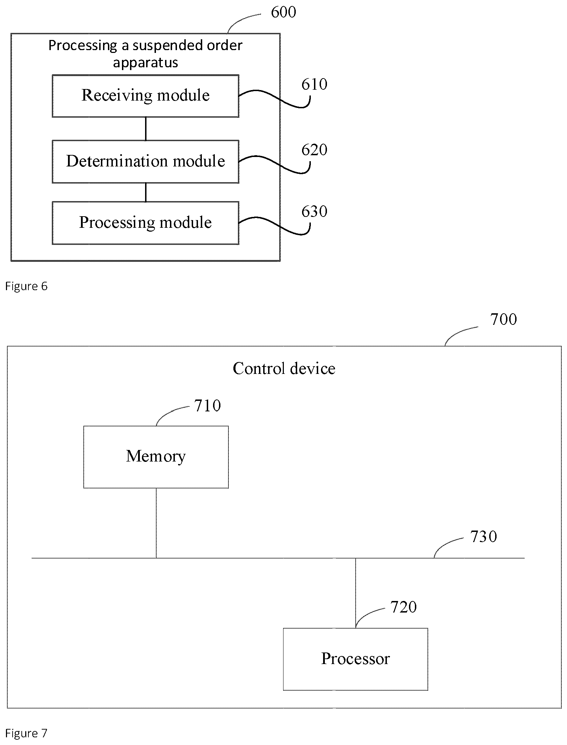

FIG. 6 is a schematic structural diagram of an apparatus for processing a suspended order according to an embodiment of the present disclosure. As shown in FIG. 6, an apparatus 600 for processing a suspended order includes a receiving module 610, a determination module 620, and a processing module 630.

The receiving module 610 is configured to: receive a taking over request for a target order, and determine a first workstation corresponding to the target order according to the taking over request, where the target order is an order suspended when a second workstation performs an order suspending operation.

The determination module 620 is configured to determine a processing strategy of the target order based on a state of the target order when being suspended at the second workstation.

The processing module 630 is configured to complete the target order at the first workstation based on the processing strategy.

In the receiving module 610, the taking over request is a request sent by the first workstation based on scanning of an identification code of an order container by a taking over device of the first workstation.

Optionally, the determination module 620 is further configured to: before the taking over request for the target order is received and the first workstation corresponding to the target order is determined according to the taking over request, determine, in response to receiving an order suspending request of the second workstation, at least one order corresponding to the order suspending request, where the order suspending request is used for requesting to pause processing of the at least one order, and the at least one order includes the target order; and determine, based on a state of each order when being suspended at the second workstation, a processing strategy of an operation container associated with the at least one order.

Optionally, the determination module 620 is further configured to: when a first class order in a picking shortage state exists at the second workstation corresponding to the order suspending request, determine that the first class order is the at least one order corresponding to the order suspending request; when an order in a picking shortage state does not exist at the second workstation corresponding to the order suspending request, determine that each uncompleted order corresponding to the second workstation is the at least one order corresponding to the order suspending request; and/or in response to first indication information of the second workstation, determine that an order specified by the first indication information is the at least one order corresponding to the order suspending request.

Optionally, the determination module 620 is further configured to: determine, based on a vacant state of an order container associated with each order, a first processing strategy of the order container; and determine, based on an execution state of a bin associated with each order, a second processing strategy of the bin.

Optionally, the determination module 620 is further configured to: when a picked material has been placed in the order container, determine that the first processing strategy is canceling binding relationships between the order container and a transporting task of a bin, between the order container and the second workstation, and between the order container and a seeding position.

Optionally, the determination module 620 is further configured to: when a bin has not been bound to a warehouse robot or has not been retrieved by a bound warehouse robot, determine that the second processing strategy is canceling a outbound task for the bin; when a bin has been retrieved by a bound warehouse robot but has not been transported to the second workstation, determine that the second processing strategy is indicating the bound warehouse robot to transport the bin back for restocking; and when a bin has been transported to the second workstation by a bound warehouse robot, determine that the second processing strategy is indicating the bound warehouse robot to transport the bin back for restocking or indicating the second workstation to temporarily store the bin.

Optionally, the determination module 620 is further configured to: if the at least one order corresponding to the order suspending request is a first class order in a picking shortage state, determine that the second workstation corresponding to the order suspending request is in an order-allocable state; and if a first class order in a picking shortage state does not exist at the second workstation, determine that the second workstation corresponding to the order suspending request is in an order-unallocable state.

Optionally, the determination module 620 is further configured to: determine, based on an order fulfillment level of the target order when being suspended at the second workstation, that the processing strategy of the target order is generating an order task associated with the target order according to an unfulfillment quantity of the target order.

In this embodiment, in the apparatus for processing a suspended order, the modules are combined, so that a corresponding processing strategy can be determined in a targeted manner based on a specific case of a suspended order after a taking over request is received, to complete the outbound of the suspended order, to effectively avoid the problem that an order task cannot be completed in time after an order is suspended, thereby improving the management efficiency of a warehouse.

FIG. 7 is a schematic structural diagram of a control device according to an embodiment of the present disclosure. As shown in FIG. 7, a control device 700 includes a memory 710 and a processor 720.

The memory 710 is configured to store a computer program executable by at least one processor 720. The computer program is executed by the at least one processor 720 to cause the control device to implement the method for processing a suspended order provided in any foregoing embodiment.

The memory 710 may be connected to the processor 720 by a bus 730.

For related description, correspondingly refer to related description and effects corresponding to the method embodiments for understanding. Details are not described herein.

An embodiment of the present disclosure provides a computer-readable storage medium, storing a computer program. The computer program, when being executed by a processor, implement the method for processing a suspended order provided in any foregoing method embodiment.

The computer-readable storage medium may be a ROM, a random access memory (RAM), a CD-ROM, a magnetic tape, a floppy disk, an optical data storage device, or the like.

An embodiment of the present disclosure provides a computer program product. The computer program product includes computer-executable instructions. The computer-executable instructions, when being executed by a processor, implement the method for processing a suspended order provided in the foregoing method embodiment.

In the several embodiments provided in the present disclosure, it should be understood that the disclosed apparatus and method may be implemented in other manners. For example, the apparatus embodiments described above are merely exemplary. For example, the division of the modules is merely the division of logic functions, and may use other division manners during actual implementation. For example, a plurality of modules or components may be combined, or may be integrated into another system, or some features may be omitted or skipped. In addition, the displayed or discussed mutual couplings or direct couplings or communication connections may be implemented by using some interfaces. The indirect couplings or communication connections between the apparatuses or modules may be implemented in electronic, mechanical, or other forms.

After considering the specification and practicing the present disclosure, a person skilled in the art can easily conceive of other implementations of the present disclosure. The present disclosure is intended to cover any variation, use, or adaptive change of the present disclosure. These variations, uses, or adaptive changes follow the general principles of the present disclosure and include common general knowledge or common technical means, which are not disclosed in the present disclosure, in the technology. The specification and the embodiments are merely for an illustration purpose, and the true scope and spirit of the present disclosure are subject to the following claims.

It should be understood that the present disclosure is not limited to the precise structures described above and shown in the accompanying drawings, and various modifications and changes can be made without departing from the scope of the present invention. The scope of the present invention is limited only by the appended claims.

## Claims

1. A method for processing a suspended order, applicable to a smart warehouse system, the method comprising:
receiving (S201, S307) a taking over request for a target order, and determining a first workstation corresponding to the target order according to the taking over request, wherein the target order is an order suspended when a second workstation performs an order suspending operation;
determining (S202, S308) a processing strategy of the target order based on a state of the target order when being suspended at the second workstation; and
completing (S203, S309, S405) the target order at the first workstation based on the processing strategy;
wherein the taking over request is a request sent by the first workstation based on scanning of an identification code of an order container by a taking over device of the first workstation.

2. The method for processing a suspended order according to claim 1, wherein before the receiving (S201, S307) a taking over request for a target order, and determining a first workstation corresponding to the target order according to the taking over request, the method further comprises:
determining (S301, S501), in response to receiving an order suspending request of the second workstation, at least one order corresponding to the order suspending request, wherein the order suspending request is used for requesting to pause processing of the at least one order, and the at least one order comprises the target order; and
determining, based on a state of each order when being suspended at the second workstation, a processing strategy of an operation container associated with the at least one order.

3. The method for processing a suspended order according to claim 2, wherein the determining (S301, S501), in response to receiving an order suspending request of the second workstation, at least one order corresponding to the order suspending request comprises:
when a first class order in a picking shortage state exists at the second workstation corresponding to the order suspending request, determining (S3011, S3014) that the first class order is the at least one order corresponding to the order suspending request;
when an order in a picking shortage state does not exist at the second workstation corresponding to the order suspending request, determining (S3012, S3015) that each uncompleted order corresponding to the second workstation is the at least one order corresponding to the order suspending request; and/or
in response to first indication information of the second workstation, determining (S3013, S3014, S3015) that an order specified by the first indication information is the at least one order corresponding to the order suspending request.

4. The method for processing a suspended order according to claim 2, wherein the determining, based on a state of each order when being suspended at the second workstation, a processing strategy of an operation container associated with the at least one order comprises:
determining (S302), based on a vacant state of an order container associated with each order, a first processing strategy of the order container; and
determining (S303), based on an execution state of a bin associated with each order, a second processing strategy of the bin.

5. The method for processing a suspended order according to claim 4, wherein the determining (S302), based on a vacant state of an order container associated with each order, a first processing strategy of the order container comprises:
when a picked material has been placed in the order container, determining that the first processing strategy is canceling binding relationships between the order container and a transporting task of a bin, between the order container and the second workstation, and between the order container and a seeding position.

6. The method for processing a suspended order according to claim 4, wherein the determining (S303), based on an execution state of a bin associated with each order, a second processing strategy of the bin comprises:
when a bin has not been bound to a warehouse robot or has not been retrieved by a bound warehouse robot, determining that the second processing strategy is canceling an outbound task for the bin;
when a bin has been retrieved by a bound warehouse robot but has not been transported to the second workstation, determining that the second processing strategy is indicating the bound warehouse robot to transport the bin back for restocking; and
when a bin has been transported to the second workstation by a bound warehouse robot, determining that the second processing strategy is indicating the bound warehouse robot to transport the bin back for restocking or indicating the second workstation to temporarily store the bin.

7. The method for processing a suspended order according to any one of claims 2 to 6, wherein after the determining (S301), in response to receiving an order suspending request of the second workstation, at least one order corresponding to the order suspending request, the method further comprises:
if the at least one order corresponding to the order suspending request is a first class order in a picking shortage state, determining (S304) that the second workstation corresponding to the order suspending request is in an order-allocable state; and
if a first class order in a picking shortage state does not exist at the second workstation, determining (S305) that the second workstation corresponding to the order suspending request is in an order-unallocable state.

8. The method for processing a suspended order according to any one of claims 1 to 6, wherein the determining (S202, S308) a processing strategy of the target order based on a state of the target order when being suspended at the second workstation comprises:
determining (S404), based on an order fulfillment level of the target order when being suspended at the second workstation, that the processing strategy of the target order is generating an order task associated with the target order according to an unfulfillment quantity of the target order.

9. An apparatus (600) for processing a suspended order, applicable to a smart warehouse system, the apparatus comprising:
a receiving module (610), configured to: receive a taking over request for a target order, and determine a first workstation corresponding to the target order according to the taking over request, wherein the target order is an order suspended when a second workstation performs an order suspending operation;
a determination module (620), configured to determine a processing strategy of the target order based on a state of the target order when being suspended at the second workstation; and
a processing module (630), configured to complete the target order at the first workstation based on the processing strategy;
wherein in the receiving module, the taking over request is a request sent by the first workstation based on scanning of an identification code of an order container by a taking over device of the first workstation.

10. A computer-readable storage medium, wherein the computer-readable storage medium is configured to store computer-executable instructions, and the computer-executable instructions, when being executed by a processor, implement the method for processing a suspended order according to any one of claims 1 to 8.

## Patentansprüche

1. Verfahren zur Verarbeitung einer ausgesetzten Bestellung, anwendbar auf ein intelligentes Lagersystem, wobei das Verfahren umfasst:
Empfangen (S201, S307) einer Übernahmeanforderung für eine Zielbestellung und Bestimmen einer ersten Arbeitsstation, die der Zielbestellung entspricht, gemäß der Übernahmeanforderung, wobei die Zielbestellung eine Bestellung ist, die ausgesetzt wird, wenn eine zweite Arbeitsstation einen Bestellaussetzungsvorgang durchführt;
Bestimmen (S202, S308) einer Verarbeitungsstrategie der Zielbestellung basierend auf einem Zustand der Zielbestellung, wenn sie an der zweiten Arbeitsstation ausgesetzt wird; und
Abschließen (S203, S309, S405) der Zielbestellung an der ersten Arbeitsstation basierend auf der Verarbeitungsstrategie;
wobei die Übernahmeanforderung eine Anforderung ist, die von der ersten Arbeitsstation basierend auf einem Scannen eines Identifikationscodes eines Bestellbehälters durch eine Übernahmevorrichtung der ersten Arbeitsstation gesendet wird.

2. Verfahren zur Verarbeitung einer ausgesetzten Bestellung nach Anspruch 1, wobei vor dem Empfangen (S201, S307) einer Übernahmeanforderung für eine Zielbestellung und Bestimmen einer ersten Arbeitsstation, die der Zielbestellung entspricht, gemäß der Übernahmeanforderung, das Verfahren ferner umfasst:
Bestimmen (S301, S501), als Reaktion auf das Empfangen einer Bestellaussetzungsanforderung der zweiten Arbeitsstation, von mindestens einer Bestellung, die der Bestellaussetzungsanforderung entspricht, wobei die Bestellaussetzungsanforderung verwendet wird, um das Pausieren der Verarbeitung der mindestens einen Bestellung anzufordern, und die mindestens eine Bestellung die Zielbestellung umfasst; und
Bestimmen, basierend auf einem Zustand jeder Bestellung, wenn sie an der zweiten Arbeitsstation ausgesetzt wird, einer Verarbeitungsstrategie eines Betriebsbehälters, der der mindestens einen Bestellung zugeordnet ist.

3. Verfahren zur Verarbeitung einer ausgesetzten Bestellung nach Anspruch 2, wobei das Bestimmen (S301, S501), als Reaktion auf das Empfangen einer Bestellaussetzungsanforderung der zweiten Arbeitsstation, von mindestens einer Bestellung, die der Bestellaussetzungsanforderung entspricht, umfasst:
wenn eine Bestellung erster Klasse in einem Kommissionierungsmangelzustand an der zweiten Arbeitsstation, die der Bestellaussetzungsanforderung entspricht, existiert, Bestimmen (S3011, S3014), dass die Bestellung erster Klasse die mindestens eine Bestellung ist, die der Bestellaussetzungsanforderung entspricht;
wenn eine Bestellung in einem Kommissionierungsmangelzustand an der zweiten Arbeitsstation, die der Bestellaussetzungsanforderung entspricht, nicht existiert, Bestimmen (S3012, S3015), dass jede unvollständige Bestellung, die der zweiten Arbeitsstation entspricht, die mindestens eine Bestellung ist, die der Bestellaussetzungsanforderung entspricht; und/oder
als Reaktion auf erste Angabeinformation der zweiten Arbeitsstation, Bestimmen (S3013, S3014, S3015), dass eine Bestellung, die durch die erste Angabeinformation spezifiziert wird, die mindestens eine Bestellung ist, die der Bestellaussetzungsanforderung entspricht.

4. Verfahren zur Verarbeitung einer ausgesetzten Bestellung nach Anspruch 2, wobei das Bestimmen, basierend auf einem Zustand jeder Bestellung, wenn sie an der zweiten Arbeitsstation ausgesetzt wird, einer Verarbeitungsstrategie eines Betriebsbehälters, der der mindestens einen Bestellung zugeordnet ist, umfasst:
Bestimmen (S302), basierend auf einem Leerzustand eines Bestellbehälters, der jeder Bestellung zugeordnet ist, einer ersten Verarbeitungsstrategie des Bestellbehälters; und
Bestimmen (S303), basierend auf einem Ausführungszustand eines Behälters, der jeder Bestellung zugeordnet ist, einer zweiten Verarbeitungsstrategie des Behälters.

5. Verfahren zur Verarbeitung einer ausgesetzten Bestellung nach Anspruch 4, wobei das Bestimmen (S302), basierend auf einem Leerzustand eines Bestellbehälters, der jeder Bestellung zugeordnet ist, einer ersten Verarbeitungsstrategie des Bestellbehälters, umfasst:
wenn ein entnommenes Material in dem Bestellbehälter platziert worden ist, Bestimmen, dass die erste Verarbeitungsstrategie das Aufheben von Bindungsbeziehungen zwischen dem Bestellbehälter und einer Transportaufgabe eines Behälters, zwischen dem Bestellbehälter und der zweiten Arbeitsstation und zwischen dem Bestellbehälter und einer Verteilposition ist.

6. Verfahren zur Verarbeitung einer ausgesetzten Bestellung nach Anspruch 4, wobei das Bestimmen (S303), basierend auf einem Ausführungszustand eines Behälters, der jeder Bestellung zugeordnet ist, einer zweiten Verarbeitungsstrategie des Behälters, umfasst:
wenn ein Behälter nicht an einen Lagerroboter gebunden worden ist oder nicht durch einen gebundenen Lagerroboter abgerufen worden ist, Bestimmen, dass die zweite Verarbeitungsstrategie das Aufheben einer Auslagerungsaufgabe für den Behälter ist;
wenn ein Behälter durch einen gebundenen Lagerroboter abgerufen worden ist, aber nicht zu der zweiten Arbeitsstation transportiert worden ist, Bestimmen, dass die zweite Verarbeitungsstrategie das Anzeigen an den gebundenen Lagerroboter ist, den Behälter zum Wiedereinlagern zurückzutransportieren; und
wenn ein Behälter durch einen gebundenen Lagerroboter zu der zweiten Arbeitsstation transportiert worden ist, Bestimmen, dass die zweite Verarbeitungsstrategie das Anzeigen an den gebundenen Lagerroboter ist, den Behälter zum Wiedereinlagern zurückzutransportieren, oder das Anzeigen an die zweite Arbeitsstation ist, den Behälter temporär zu speichern.

7. Verfahren zur Verarbeitung einer ausgesetzten Bestellung nach einem der Ansprüche 2 bis 6, wobei nach dem Bestimmen (S301), als Reaktion auf das Empfangen einer Bestellaussetzungsanforderung der zweiten Arbeitsstation, von mindestens einer Bestellung, die der Bestellaussetzungsanforderung entspricht, das Verfahren ferner umfasst:
wenn die mindestens eine Bestellung, die der Bestellaussetzungsanforderung entspricht, eine Bestellung erster Klasse in einem Kommissionierungsmangelzustand ist, Bestimmen (S304), dass die zweite Arbeitsstation, die der Bestellaussetzungsanforderung entspricht, in einem bestellungszuweisbaren Zustand ist; und
wenn eine Bestellung erster Klasse in einem Kommissionierungsmangelzustand an der zweiten Arbeitsstation nicht existiert, Bestimmen (S305), dass die zweite Arbeitsstation, die der Bestellaussetzungsanforderung entspricht, in einem bestellungsnichtzuweisbaren Zustand ist.

8. Verfahren zur Verarbeitung einer ausgesetzten Bestellung nach einem der Ansprüche 1 bis 6, wobei das Bestimmen (S202, S308) einer Verarbeitungsstrategie der Zielbestellung basierend auf einem Zustand der Zielbestellung, wenn sie an der zweiten Arbeitsstation ausgesetzt wird, umfasst: Bestimmen (S404), basierend auf einem Bestellerfüllungsgrad der Zielbestellung, wenn sie an der zweiten Arbeitsstation ausgesetzt wird, dass die Verarbeitungsstrategie der Zielbestellung das Erzeugen einer Bestellaufgabe ist, die der Zielbestellung zugeordnet ist, gemäß einer Nichterfüllungsmenge der Zielbestellung.

9. Vorrichtung (600) zur Verarbeitung einer ausgesetzten Bestellung, anwendbar auf ein intelligentes Lagersystem, wobei die Vorrichtung umfasst:
ein Empfangsmodul (610), das konfiguriert ist, um: eine Übernahmeanforderung für eine Zielbestellung zu empfangen und eine erste Arbeitsstation, die der Zielbestellung entspricht, gemäß der Übernahmeanforderung zu bestimmen, wobei die Zielbestellung eine Bestellung ist, die ausgesetzt wird, wenn eine zweite Arbeitsstation einen Bestellaussetzungsvorgang durchführt;
ein Bestimmungsmodul (620), das konfiguriert ist, um eine Verarbeitungsstrategie der Zielbestellung basierend auf einem Zustand der Zielbestellung, wenn sie an der zweiten Arbeitsstation ausgesetzt wird, zu bestimmen; und
ein Verarbeitungsmodul (630), das konfiguriert ist, um die Zielbestellung an der ersten Arbeitsstation basierend auf der Verarbeitungsstrategie abzuschließen;
wobei in dem Empfangsmodul die Übernahmeanforderung eine Anforderung ist, die von der ersten Arbeitsstation basierend auf einem Scannen eines Identifikationscodes eines Bestellbehälters durch eine Übernahmevorrichtung der ersten Arbeitsstation gesendet wird.

10. Computerlesbares Speichermedium, wobei das computerlesbare Speichermedium konfiguriert ist, um computerausführbare Anweisungen zu speichern, und die computerausführbaren Anweisungen, wenn sie durch einen Prozessor ausgeführt werden, das Verfahren zur Verarbeitung einer ausgesetzten Bestellung nach einem der Ansprüche 1 bis 8 implementieren.

## Revendications

1. Procédé de traitement d'une commande suspendue, applicable à un système d'entrepôt intelligent, le procédé comprenant :
la réception (S201, S307) d'une demande de prise en charge pour une commande cible, et la détermination d'un premier poste de travail qui correspond à la commande cible selon la demande de prise en charge, dans lequel la commande cible est une commande qui est suspendue lorsqu'un deuxième poste de travail effectue une opération de suspension de commande ;
la détermination (S202, S308) d'une stratégie de traitement de la commande cible sur la base d'un état de la commande cible lorsqu'elle est suspendue au deuxième poste de travail ; et
l'achèvement (S203, S309, S405) de la commande cible au premier poste de travail sur la base de la stratégie de traitement ;
dans lequel la demande de prise en charge est une demande qui est envoyée par le premier poste de travail sur la base d'un balayage d'un code d'identification d'un conteneur de commande par un dispositif de prise en charge du premier poste de travail.

2. Procédé de traitement d'une commande suspendue selon la revendication 1, dans lequel avant la réception (S201, S307) d'une demande de prise en charge pour une commande cible, et la détermination d'un premier poste de travail qui correspond à la commande cible selon la demande de prise en charge, le procédé comprend en outre :
la détermination (S301, S501), en réponse à la réception d'une demande de suspension de commande du deuxième poste de travail, d'au moins une commande qui correspond à la demande de suspension de commande, dans lequel la demande de suspension de commande est utilisée pour demander de mettre en pause le traitement de ladite au moins une commande, et ladite au moins une commande comprend la commande cible ; et
la détermination, sur la base d'un état de chaque commande lorsqu'elle est suspendue au deuxième poste de travail, d'une stratégie de traitement d'un conteneur d'opération qui est associé à ladite au moins une commande.

3. Procédé de traitement d'une commande suspendue selon la revendication 2, dans lequel la détermination (S301, S501), en réponse à la réception d'une demande de suspension de commande du deuxième poste de travail, d'au moins une commande qui correspond à la demande de suspension de commande comprend :
lorsqu'une commande de première classe dans un état de pénurie de prélèvement existe au deuxième poste de travail qui correspond à la demande de suspension de commande, la détermination (S3011, S3014) que la commande de première classe est ladite au moins une commande qui correspond à la demande de suspension de commande ;
lorsqu'une commande dans un état de pénurie de prélèvement n'existe pas au deuxième poste de travail qui correspond à la demande de suspension de commande, la détermination (S3012, S3015) que chaque commande non achevée qui correspond au deuxième poste de travail est ladite au moins une commande qui correspond à la demande de suspension de commande ; et/ou
en réponse à des premières informations d'indication du deuxième poste de travail, la détermination (S3013, S3014, S3015) qu'une commande qui est spécifiée par les premières informations d'indication est ladite au moins une commande qui correspond à la demande de suspension de commande.

4. Procédé de traitement d'une commande suspendue selon la revendication 2, dans lequel la détermination, sur la base d'un état de chaque commande lorsqu'elle est suspendue au deuxième poste de travail, d'une stratégie de traitement d'un conteneur d'opération qui est associé à ladite au moins une commande comprend :
la détermination (S302), sur la base d'un état vacant d'un conteneur de commande qui est associé à chaque commande, d'une première stratégie de traitement du conteneur de commande ; et
la détermination (S303), sur la base d'un état d'exécution d'un bac qui est associé à chaque commande, d'une deuxième stratégie de traitement du bac.

5. Procédé de traitement d'une commande suspendue selon la revendication 4, dans lequel la détermination (S302), sur la base d'un état vacant d'un conteneur de commande qui est associé à chaque commande, d'une première stratégie de traitement du conteneur de commande comprend :
lorsqu'un matériau prélevé a été placé dans le conteneur de commande, la détermination que la première stratégie de traitement consiste à annuler des relations de liaison entre le conteneur de commande et une tâche de transport d'un bac, entre le conteneur de commande et le deuxième poste de travail, et entre le conteneur de commande et une position de répartition.

6. Procédé de traitement d'une commande suspendue selon la revendication 4, dans lequel la détermination (S303), sur la base d'un état d'exécution d'un bac qui est associé à chaque commande, d'une deuxième stratégie de traitement du bac comprend :
lorsqu'un bac n'a pas été lié à un robot d'entrepôt ou n'a pas été récupéré par un robot d'entrepôt lié, la détermination que la deuxième stratégie de traitement consiste à annuler une tâche de sortie pour le bac ;
lorsqu'un bac a été récupéré par un robot d'entrepôt lié mais n'a pas été transporté au deuxième poste de travail, la détermination que la deuxième stratégie de traitement consiste à indiquer au robot d'entrepôt lié de transporter le bac en retour pour un réapprovisionnement ; et
lorsqu'un bac a été transporté au deuxième poste de travail par un robot d'entrepôt lié, la détermination que la deuxième stratégie de traitement consiste à indiquer au robot d'entrepôt lié de transporter le bac en retour pour un réapprovisionnement ou à indiquer au deuxième poste de travail de stocker temporairement le bac.

7. Procédé de traitement d'une commande suspendue selon l'une quelconque des revendications 2 à 6, dans lequel après la détermination (S301), en réponse à la réception d'une demande de suspension de commande du deuxième poste de travail, d'au moins une commande qui correspond à la demande de suspension de commande, le procédé comprend en outre :
si ladite au moins une commande qui correspond à la demande de suspension de commande est une commande de première classe dans un état de pénurie de prélèvement, la détermination (S304) que le deuxième poste de travail qui correspond à la demande de suspension de commande est dans un état attribuable de commande ; et
si une commande de première classe dans un état de pénurie de prélèvement n'existe pas au deuxième poste de travail, la détermination (S305) que le deuxième poste de travail qui correspond à la demande de suspension de commande est dans un état non attribuable de commande.

8. Procédé de traitement d'une commande suspendue selon l'une quelconque des revendications 1 à 6, dans lequel la détermination (S202, S308) d'une stratégie de traitement de la commande cible sur la base d'un état de la commande cible lorsqu'elle est suspendue au deuxième poste de travail comprend :
la détermination (S404), sur la base d'un niveau d'exécution de commande de la commande cible lorsqu'elle est suspendue au deuxième poste de travail, que la stratégie de traitement de la commande cible consiste à générer une tâche de commande qui est associée à la commande cible selon une quantité non exécutée de la commande cible.

9. Dispositif (600) de traitement d'une commande suspendue, applicable à un système d'entrepôt intelligent, le dispositif comprenant :
un module de réception (610), qui est configuré pour : recevoir une demande de prise en charge pour une commande cible, et déterminer un premier poste de travail qui correspond à la commande cible selon la demande de prise en charge, dans lequel la commande cible est une commande qui est suspendue lorsqu'un deuxième poste de travail effectue une opération de suspension de commande ;
un module de détermination (620), qui est configuré pour déterminer une stratégie de traitement de la commande cible sur la base d'un état de la commande cible lorsqu'elle est suspendue au deuxième poste de travail ; et
un module de traitement (630), qui est configuré pour achever la commande cible au premier poste de travail sur la base de la stratégie de traitement ;
dans lequel dans le module de réception, la demande de prise en charge est une demande qui est envoyée par le premier poste de travail sur la base d'un balayage d'un code d'identification d'un conteneur de commande par un dispositif de prise en charge du premier poste de travail.

10. Support de stockage lisible par ordinateur, dans lequel le support de stockage lisible par ordinateur est configuré pour stocker des instructions exécutables par ordinateur, et les instructions exécutables par ordinateur, lorsqu'elles sont exécutées par un processeur, mettent en oeuvre le procédé de traitement d'une commande suspendue selon l'une quelconque des revendications 1 à 8.
